# EUROPÄISCHE PATENTANMELDUNG

(11) **EP 1 323 524 A1**
(43) Veröffentlichungstag der Anmeldung: **02.07.2003**
(21) Anmeldenummer: 02028542.5
(22) Anmeldetag: 20.12.2002
(51) Int. Cl.: B32B 27/32, B65D 65/40

(54) **Verbundfolie mit Barriereeigenschaften**

(30) Priorität: 28.12.2001 DE 10164015
(71) Anmelder: Hydro Aluminium Deutschland GmbH, 53117 Bonn (DE); Huhtamaki Deutschland GmbH & Co. KG, 91301 Forcheim (DE)
(72) Erfinder: Kothmeier, Josef, Dr., 91154 Roth (DE); Boiron, Guy, 68920 Wintzenheim (FR); Weiteder, Hans, Dr., 79312 Emmendingen (DE); Walcher, Tobias, Dr., 96114 Hirschaid (DE); Günter, Walter, 37120 Eddigehausen (DE)
(74) Vertreter: Cohausz & Florack

(57) **Zusammenfassung**

Die Erfindung betrifft eine Verbundfolie (1) mit Barriereeigenschaften. Die Aufgabe, eine Verbundfolie, welche bei guter Verarbeitbarkeit eine hohe Barriereeigenschaft bezüglich Wasserdampf und gasförmigen Stoffen aufweist und unproblematisch entsorgt werden kann, zur Verfügung zu stellen, wird dadurch gelöst, dass die Verbundfolie (1) mindestens eine Ethylen-Vinylalkohol(EVOH)-Folienschicht (2) und mindestens eine Cyclo-Olefin-Copolymer(COC)-Folienschicht (3) umfasst.

## Beschreibung

Die Erfindung betrifft eine Verbundfolie mit Barriereeigenschaften.

Zur Verpackung von Waren werden häufig Kunststofffolien eingesetzt. Als problematisch hat sich dabei besonders die Verpackung von verderblichen Waren, beispielsweise Lebensmittel, oder von Waren, deren Qualität durch bestimmte Medien verschlechtert wird, herausgestellt. Die ist begründet darin, dass Kunststofffolien häufig für bestimmte Stoffe durchlässig oder zumindest semipermeabel sind. Zur Unterdrückung oder Minimierung derartiger Prozesse werden häufig Verbundfolien aus Kunststoff eingesetzt. Verbundfolien sind dabei aus mehreren Folienschichten aus verschiedenen Materialien aufgebaut. Die verschiedenen Folienschichten weisen bestimmte Barriereeigenschaften auf, um die Diffusion bestimmter Medien, beispielsweise Sauerstoff oder Wasserdampf, durch die Verbundfolie zu unterdrücken oder zu minimieren. Verbundfolien mit besonders hohen Barriereeigenschaften werden beispielsweise für die Verpackung von Frischfleisch und pharmazeutischen Erzeugnissen oder für medizinische Beutelsysteme benötigt.

Die bisher eingesetzten Materialsysteme weisen dabei jedoch unterschiedliche Nachteile auf. So weisen Verbundfolien mit Polyvinylidenchlorid (PVDC-Schichten) gute Barriereeigenschaften bezüglich Sauerstoff und Wasserdampf auf, allerdings ist die Entsorgung derartiger Verbundfolien aufgrund der PVDC-Barriereschichten problematisch.

Verbundfolien aus Polypropylen (PP), Polyamid (PA), Low-Density Polyethylen (LDPE) oder High-Density Polyethylen (HDPE) sind zwar in der Entsorgung unkritisch, weisen jedoch nur ein mittleres Barriereniveau bezüglich Wasserdampf auf und sind daher nicht zur Verpackung beispielsweise von pharmazeutischen Erzeugnissen oder Lebensmitteln geeignet. Die Barriereeigenschaften derartiger Folien in Bezug auf O₂ kann jedoch durch das Einbringen einer Ethylen-Vinylalkohol (EVOH-Schicht) deutlich gesteigert werden. Nachteilig ist dabei, dass die EVOH-Folienschicht zwar eine hohe Gasbarriere aufweist, die Barriereeigenschaften bezüglich Wasserdampf jedoch schlecht sind.

Weiterhin sind Verbundfolien mit äußeren PA-, PP-, LDPEoder HDPE-Folienschichten und einer innenliegenden Folienschicht aus Cyclo-Olefin-Copolymer(COC) bekannt. Aufgrund der innenliegenden COC-Folienschicht sind die Wasserdampfbarriereeigenschaften einer solchen Verbundfolie besonders hoch, jedoch ist die Barrierewirkung für Sauerstoff und andere gasförmige Stoffe gering.

Ausgehend von dem erläuterten Stand der Technik liegt der Erfindung die Aufgabe zugrunde, eine Verbundfolie, welche bei guter Verarbeitbarkeit eine hohe Barriereeigenschaft bezüglich Wasserdampf und gasförmigen Stoffen aufweist und unproblematisch entsorgt werden kann, zur Verfügung zu stellen sowie ein Verfahren zur Herstellung und eine bevorzugte Verwendung der Verbundfolie vorzuschlagen.

Gemäß der ersten Lehre der Erfindung ist die zuvor hergeleitete und aufgezeigte Aufgabe für eine Verbundfolie mit Barriereeigenschaften dadurch gelöst, dass die Verbundfolie mindestens eine EVOH-Folienschicht und mindestens eine COC-Folienschicht umfasst. Die erfindungsgemäß aufgebaute Verbundfolie stellt bei hoher Barrierewirkung bezüglich Wasserdampf zusätzlich eine hohe Gasbarriere zur Verfügung. Weiterhin gilt die Entsorgung der für die Barriereeigenschaften der Verbundfolie verantwortlichen EVOH- und COC-Folienschichten als unproblematisch.

Sind mindestens zwei äußere Folienschichten zum Schutz der EVOH- und COC-Folienschichten vorgesehen, können diese, gemäß einer weiteren Ausführungsform der erfindungsgemäßen Verbundfolie, vor dem Einfluss äußerer Medien geschützt werden.

Gemäß einer weitergebildeten Ausführungsform der erfindungsgemäßen Verbundfolie sind gegen unpolare Medien ständige äußere Folienschichten vorgesehen, so dass gewährleistet ist, dass insbesondere die gegen diese Medien nicht beständigen COC-Folienschichten geschützt werden.

Eine besonders kostengünstige Verbundfolie, die unproblematisch entsorgt werden kann und deren Barriereschichten zugleich ausreichend geschützt sind, wird gemäß einer nächsten Ausführungsform der erfindungsgemäßen Verbundfolie zur Verfügung gestellt, indem die Folienschichtfolge PP-EVOH-COC-PP vorgesehen ist.

Ist zwischen jeweils zwei Folienschichten ein zu den jeweiligen Folienschichten kompatibler Haftvermittler vorgesehen, so kann, gemäß einer nächsten Ausführungsform der erfindungsgemäßen Verbundfolie, der Einsatz der Verbundfolie auf vollautomatischen Verpackungsmaschinen sichergestellt werden. Als Haftvermittler werden dabei Polymere aus einem Basispolymer, welches eine gute Verträglichkeit zum ersten zu verbindenden Kunststoff aufweist und einem Co-Monomer bzw. einem Ter-Monomer, das eine Verträglichkeit zum zweiten zu verbindenden Kunststoff aufweist, verwendet. Als typische Haftvermittler werden modifiziertes Ethylenvinylacetat, beispielsweise anhydridmodifiziertes, säure- oder acrylatmodifiziertes Ethylenvinylacetat oder säure- oder anhydridmodifiziertes Ethylenacrylat oder anhydridmodifiziertes PE hoher Dichte, anhydridmodifiziertes lineares PE hoher Dichte oder anhydridmodifiziertes PP verwendet.

Eine allgemein gute Verarbeitbarkeit der EVOH-Schichten wird gemäß einer nächsten Ausführungsform der erfindungsgemäßen Verbundfolie dadurch erreicht, dass das EVOH einen Polyethylen(PE)-Anteil von 32 bis 44 Mol% aufweist. Zusätzlich wird die Knickbruchempfindlichkeit der erfindungsgemäßen Verbundfolie reduziert.

Gemäß einer weiteren Ausführungsform der erfindungsgemäßen Verbundfolie, weist das COC eine Glas-Temperatur von 80°C bis 180°C auf, so dass die Temperaturstabilität der COC-Folienschichten auf den jeweiligen Anwendungsfall angepasst werden kann.

Gemäß einer zweiten Lehre der Erfindung wird die oben hergeleitete und aufgezeigte Aufgabe verfahrensmäßig dadurch gelöst, dass die Folienschichten coextrudiert werden. Durch Coextrusion können die verschiedenen Folienschichten der erfindungsgemäßen Verbundfolie auf wirtschaftliche Weise zu einer Verbundfolie zusammengefügt werden. Die resultierenden Schichtdicken der Verbundfolie sind dabei in einem weiten Bereich einstellbar.

Gemäß einer weiteren Lehre der vorliegenden Erfindung, ist die Verwendung der erfindungsgemäßen Verbundfolie bei der Herstellung von Verpackungssystemen besonders vorteilhaft. Entsprechende Verpackungen weisen hohe Barriereeigenschaften für Wasserdampf und gasförmige Stoffe auf, wodurch diese Verpackungssysteme insbesondere für die Verpackung von pharmazeutischen Erzeugnissen, Frischfleisch und medizinische Beutelsysteme geeignet ist.

Wird die erfindungsgemäße Verbundfolie bei der Herstellung eines Behälters durch Thermoumformen verwendet, so können auf einfache Weise mit Maschinen und Vorrichtungen für konventionelle Verpackungen Behälter mit hoher Barrierewirkung hergestellt werden.

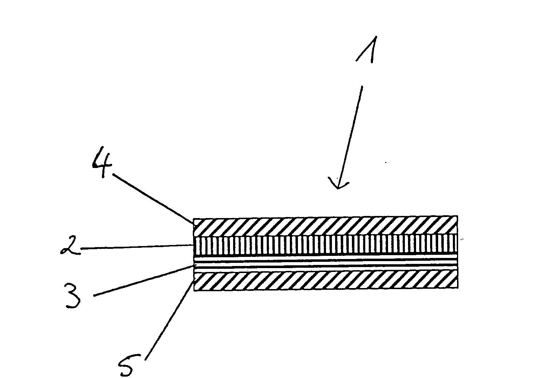

Es gibt nun eine Vielzahl von Möglichkeiten, die erfindungsgemäße Verbundfolie mit Barriereeigenschaften, dass Verfahren zur Herstellung und die Verwendung der erfindungsgemäßen Verbundfolie auszugestalten und weiterzubilden. Hierzu wird beispielsweise verwiesen einerseits auf die den Patentansprüchen 1 und 9 nachgeordneten Patentansprüche, andererseits auf die Beschreibung bevorzugter Ausführungsbeispiele in Verbindung mit der Zeichnung.

Die einzige Figur zeigt ein Ausführungsbeispiel einer erfindungsgemäßen Verbundfolie in einer Schnittansicht.

In der Zeichnung zeigt die einzige Figur ein Ausführungsbeispiel einer erfindungsgemäßen Verbundfolie 1 mit Barriereeigenschaften. Wie in der Schnittansicht zu erkennen ist, besteht die erfindungsgemäße Verbundfolie 1 aus insgesamt vier einzelnen Folienschichten 2,3,4,5 welche mittels Haftvermittler (hier nicht dargestellt) beim Herstellungsprozess miteinander verbunden werden.

Erfindungsgemäß sind bei dem Ausführungsbeispiel die EVOH-Folienschicht 2 und die COC-Folienschicht 3 mit jeweils zwei äußeren PP-Folienschichten 4, 5 geschützt. Da die PP-Folienschicht 5 insbesondere gegen unpolare Medien beständig ist, ist die darunter liegende COC-Folienschicht 3, welche nicht beständig gegen unpolare Medien ist, durch diese geschützt. Die zweite PP-Folienschicht 4 schützt die EVOH-Schicht vor Wasserdampf. Dies ist notwendig, da der Vinylalkoholanteil der EVOH-Schicht hydroskopisch ist. Anstelle von PP können auch andere klassische Polyolefine oder thermoplastisch verarbeitbare Polymere, wie Polyamide, Polyester und dergleichen, wie beispielsweise LDPE oder HDPE für die äußeren Schichten eingesetzt werden.

Aufgrund der hohen Wasserdampfbarrierewirkung der COC-Folienschicht 3 wird die Pervaporation von Wasserdampf effektiv verringert. Gleichzeitig sorgt die EVOH-Folienschicht 2 durch ihre hohe Barrierewirkung bezüglich gasförmiger Stoffe dafür, dass auch Gase wie beispielsweise Sauerstoff (O₂) die Verbundfolie 1 nicht oder nur in einem sehr geringen Maß durchdringen können. Damit ist die erfindungsgemäße Verbundfolie 1 insbesondere für die Verpackung von Lebensmitteln und pharmazeutischen Erzeugnissen geeignet, da in diesem Anwendungsgebiet hohe Anforderungen an die Barrierewirkung bezüglich Sauerstoff und Wasserdampf gestellt werden.

## Patentansprüche

1. Verbundfolie (1) mit Barriereeigenschaften, welche mindestens eine Ethylen-Vinylalkohol(EVOH)-Folienschicht (2) und mindestens eine Cyclo-Olefin-Copolymer(COC)-Folienschicht (3) umfasst.

2. Verbundfolie (1) nach Anspruch 1
**dadurch gekennzeichnet, dass** zum Schutz der EVOH- und COC-Folienschichten (2,3) mindestens zwei äußere Folienschichten (4,5) vorgesehen sind.

3. Verbundfolie (1) nach Anspruch 1 oder 2
**dadurch gekennzeichnet, dass** gegen unpolare Medien beständige äußere Folienschichten (4,5) vorgesehen sind.

4. Verbundfolie (1) nach einem der Ansprüche 1 bis 3
**dadurch gekennzeichnet, dass** die Folienschichtfolge Polypropylen(PP)-EVOH-COC-PP vorgesehen ist.

5. Verbundfolie (1) nach einem der Ansprüche 1 bis 4
**dadurch gekennzeichnet, dass** zwischen jeweils zwei Folienschichten ein zu den jeweiligen Folienschichten kompatibeler Haftvermittler vorgesehen ist.

6. Verbundfolie (1) nach einem der Ansprüche 1 bis 5
**dadurch gekennzeichnet, dass** das EVOH einen Polyethylen(PE)-Anteil von 32 - 44 Mol% aufweist.

7. Verbundfolie (1) nach einem der Ansprüche 1 bis 6
**dadurch gekennzeichnet, dass** das COC eine Glas-Temperatur von 80°C bis 180°C aufweist.

8. Verfahren zur Herstellung einer Verbundfolie (1) nach einem der Ansprüche 1 bis 8
**dadurch gekennzeichnet, dass** die Folienschichten (2,3,4,5) coextrudiert werden.

9. Verwendung einer Verbundfolie (1) nach einem der Ansprüche 1 bis 8 bei der Herstellung von Verpackungssystemen.

10. Verwendung einer Verbundfolie (1) nach Anspruch 9 bei der Herstellung eines Behälters durch Thermoumformen.
